# EUROPEAN PATENT APPLICATION

(11) **EP 4 269 852 A1**
(43) Date of publication of application: **01.11.2023**
(21) Application number: 23169380.5
(22) Date of filing: 24.04.2023
(51) Int. Cl.: F16K 49/00, F16K 5/06, F16L 23/02, F16L 53/32, F16L 53/70

(54) **A PIPELINE COUPLING BODY FOR A COOLING OR HEATING FLUID, AND A PIPELINE SYSTEM COMPRISING A VALVE HOUSING AND A PAIR OF SUCH PIPELINE COUPLING BODIES**

(30) Priority: 25.04.2022 DK PA202270214
(71) Applicant: Mars Valve Europe A/S, 7100 Vejle (DK)
(72) Inventor: SVENDSEN, Henrik Aarup, 7100 Vejle (DK)
(74) Representative: Zacco Denmark A/S

(57) **Abstract**

The present invention relates to a coupling body (10) for connecting an end (9) of a pipeline section (8) to a side (3) of a valve housing (2), the coupling body (10) having a front side (14) and an opposite rear side (12), a central flow passage (20) opening up to the outside of the coupling body (10) at said front side (14) and at said rear side (12), said central flow passage (20) defining a central axis (A1) of the coupling body (10), said rear side (12) configured to be oriented towards a side (3) of a valve housing (2) when the coupling body (10) is connected to the valve housing (2), to allow for a fluid to flow between said central flow passage (20) and the inside of said valve housing (2), a connection portion (16) at said front side (14) configured for connection with an end (9) of a pipeline section (8), to allow for said fluid to flow between said pipeline section (8) and said central flow pas-sage (20), and at least four through-going apertures (11, 11') opening up at said rear side (12), each configured for receiving a respective bolt (6) for connecting the coupling body (10) to the valve housing (2), an internal annular conduit (30) extending around said central flow passage (20) and defining an internal flow passage separate from said central flow passage (20). The coupling body (10) further includes at least three ducts (40, 41, 42, 43), each communicating with said annular conduit (30) and extending in a respective radial direction (A3) relative to said central axis (A1) to the outside of the coupling body (10), at least two of said ducts (40, 41, 42, 43) being configured for connection to an end of a respective pipe (90, 91) for outside supply or discharge of a fluid to/from said annular conduit (30).

## Description

The present invention concerns a pipeline coupling body, and a system comprising a valve housing and a pair of such pipeline coupling bodies.

A pipeline architecture in a typical industrial plant may have a multiplicity of pipelines mounted next to each other in close proximity, often making it difficult to access and remove pipeline valves for maintenance.

Pipeline coupling bodies, also referred to herein as connector flanges, are commonly used to connect two pipeline sections to each other via a pipeline valve that has a valve housing and a valve body for controlling the flow of fluid through the pipeline. In special cases a heating or cooling of the pipeline valve to keep it operative is carried out by supplying a dedicated cooling or heating fluid, which fluid cools or heats the coupling bodies which then heat exchange with the valve housing by metal-to-metal heat conduction.

An example of a pipeline connection system including a non-standard valve housing and two such coupling bodies bolted to opposite sides of the valve housing is disclosed in CN105673926, the teaching of which is recited in the preamble of claim 1 herein. This prior art pipeline connection system is configured for indirect flow of the cooling or heating fluid between the two coupling bodies via the non-standard valve housing, which valve housing is designed specifically with an internal conduit to receive the cooling or heating fluid from one of the two coupling bodies. For this, two conduit sections are connected to a respective coupling body and to the valve housing and extend on opposite sides of the valve housing, whereby the unbolted valve housing can only be removed from the pipeline for maintenance by moving it sideways in one or the other of two opposite directions where the two conduit sections are not in the way.

### Summary

It is an object of the present invention to provide a coupling body for use in a pipeline connection system where standard pipeline valves must be heated or cooled and also be easily removable for maintenance, in particular where the heating or cooling fluid is to flow from one such coupling body, that is supplied with the fluid, directly to another such coupling body via a dedicated conduit. The invention may find particular use where a plurality of pipelines make up a pipeline architecture with the pipelines arranged in close proximity to each other, where standard or conventional valve housings are to be used, and where the standard valve housings are to be connected to coupling bodies in a conventional manner using bolts. A standard valve housing may in the present context be considered to be one that has no internal conduits for the heating or cooling fluid.

This object is achieved by the coupling body defined in claim 1, with an internal annular conduit and where three or more radially oriented ducts allow for connection to the cooling or heating fluid conduit, using selected ones of the ducts, on the side of the valve housing that fits with the general pipeline architecture so that the valve housing may be removed sideways relative to the pipeline for maintenance.

Preferably, four ducts are provided, each communicating with an internal annular conduit inside the coupling body. This allows for a high degree of freedom for positioning the heating or cooling fluid conduit that connects two such coupling bodies. By arranging the ducts and through-going apertures for the connecting bolts with a particular angular relationship the coupling body may be used together with valve housings having a standard arrangement of bolt-receiving lugs or passages.

Preferably, at least one of the ducts has, or is configured for receiving, a temperature sensor, a removable plug for closing off the duct to the outside, or a venting valve for venting the annular conduit.

Specifically, in one embodiment a nut may be applied to the bolt, being partially received in a corresponding recess.

The invention also relates to a pipeline connection system including two of the coupling bodies connected to a valve heated or cooled by metal-to-metal heat exchange, using a fluid flowing from one of the coupling bodies to the other.

Preferably, the connector bodies are made as a single-piece, integrally formed stainless steel body, cast in a mould with a body of wax or a similar material shaped as the annular conduit and burned out to form the annular conduit. 3-D printing technology may alternatively be used for manufacturing the coupling body.

### Brief description of the drawings

Fig. 1 is a top perspective view showing a part of a pipeline,
Fig. 2 is a view of a portion of the pipeline part of fig. 1, showing with a larger drawing scale the connection system of the invention,
Fig. 3 is a side view showing the connection system of fig. 2 in its normal configuration,
Figs. 4 and 5 are perspective and partial cross-sectional views of an embodiment of a connector flange/coupling body of the present invention,
Fig. 6 shows an alternative embodiment a connector flange/coupling body of the present invention,
Figs. 7 and 9 are front and cross-sectional views of the embodiment of fig. 4, and
Fig. 8 is a side cross-sectional view of the embodiments of fig. 4 and 6.

### Detailed description

The invention will now be explained in more detail by reference to two presently preferred embodiments.

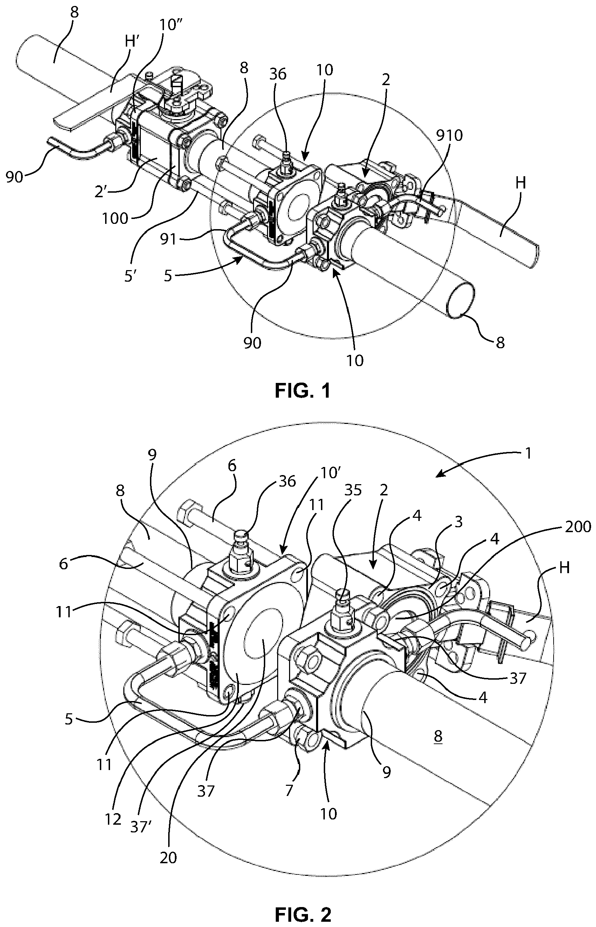

Figs. 1 and 2 are top perspective views showing two pipeline sections 8 normally connected to each other via a connection system 1 comprising a pipeline valve and two opposite metal coupling bodies or connector flanges 10, 10' according to the present invention. The pipeline valve has a metal valve housing 2 and a handle H that is used for setting the position of a valve body arranged inside the valve housing 2, in order to adjust fluid flow through the two pipeline sections 8. Setting the position of the valve body is preferably done manually using the handle H, or may be done remotely. The design of such valve housings 2 is largely standardised.

The two connector flanges 10, 10' are normally screwed or welded onto the end 9 of a respective one of the two pipeline sections 8, and will generally remain connected to the pipeline sections 8 during the lifetime of a pipeline including the shown two pipeline sections 8.

As mentioned, a pipeline architecture in a typical industrial plant may have a multiplicity of pipelines mounted next to each other in close proximity, often making it difficult to access the individual pipeline valves for maintenance. The shown connection system 1 of the invention allows for pipelines to be installed in a way that allows for an easy maintenance of the valves while at the same time allowing for a heating or cooling of the individual pipeline valves by a heating or cooling fluid that is supplied to the connector flanges 10, 10'.

In figs. 1 and 2 the valve housing 2 is in the process of being removed from the two connector flanges 10, 10' for maintenance. This follows removal of four connector bolts 6 that connect the two opposite connector flanges 10, 10' to each other. As shown, the valve housing 2 has been pulled out of alignment with the pipeline sections 8, in a sideways direction that is most appropriate given the position of adjacent pipelines (not shown). The valve housing 2 may now be replaced by another valve housing, or may be inspected. As the individual pipeline sections 8 are supported along their length this operation can be carried out without compromising the integrity of the pipeline architecture as such.

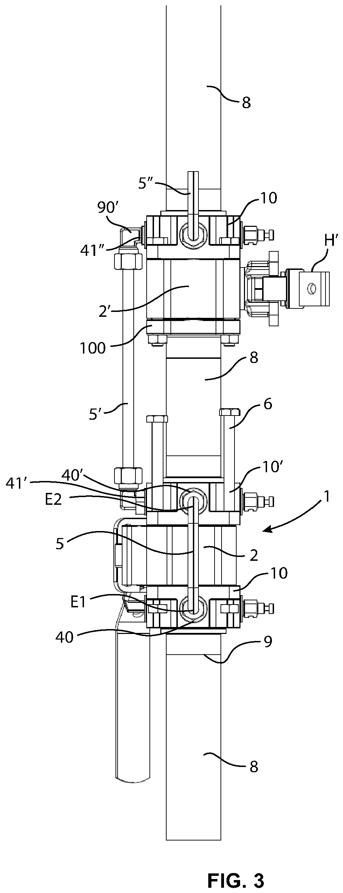

Fig. 3 is a side view showing the same valve housing 2, now in its normal position aligned with the two pipeline sections 8, ready to receive the shown bolts 6. The bolts 6 are each pushed through respective through-going apertures 11 in the two connector flanges 10, 10' and through respective, aligned elongated passages/lugs 4 in the valve housing 2. A respective nut 7 is then tightened such that the connector flanges 10, 10' are brought to bear tightly against a respective opposite side 3 of the valve housing 2, on which sides 3 preferably there is a peripheral sealing gasket contacting a side 12 of each connector flange 10, 10'. The handle H' of an upstream valve is then turned to allow fluid to flow through the two pipeline sections 8, via respective central flow passages 20 of the two connector flanges 10, 10' and through the inside passage 200 of the valve housing 2.

Shown in figs. 1-3 is also a fluid flow conduit 5 extending between the two connector flanges 10, 10' on one side of the valve housing 2, opposite the side at which the valve housing 2 is pulled out of alignment with the pipe sections 8. The fluid flow conduit 5 generally defines a sideways direction along which the valve housing 2 cannot be pulled fully out of alignment with the two pipeline sections 8. It is preferred to position the conduit 5 on a side of the pipeline sections 8 that is in close proximity to adjacent pipelines that limit or restrict free sideways movement of the valve housing 2.

The fluid flow conduit 5 is used for passing a separate cooling or heating fluid between the two connector flanges 10, 10'. The cooling or heating fluid serves to efficiently heat or cool the two connector flanges 10, 10 and, hence, the valve housing 2 by thermal conduction/heat exchange in that the two metal connector flanges 10, 10' contact the two opposite sides 3 of the metal valve housing 2.

A heating or cooling fluid supply pipe 910 is connected to one of the connector flanges 10, and heating or cooling fluid, typically in liquid form, flows through the inside of the connector flange 10, 10', then into a first portion 90 of the conduit 5 and then into a second portion 91 of the conduit 5, which second portion 91 supplies the heating or cooling fluid to the other connector flange 10'. Preferably, the conduit 5 is U-shaped, as shown.

The conduit 5 and the supply pipe 910 are each connected via a respective connector 37 to a respective one of at least three internal ducts 40, 41, 42, 43 formed in the two connector flanges 10, 10', as discussed below.

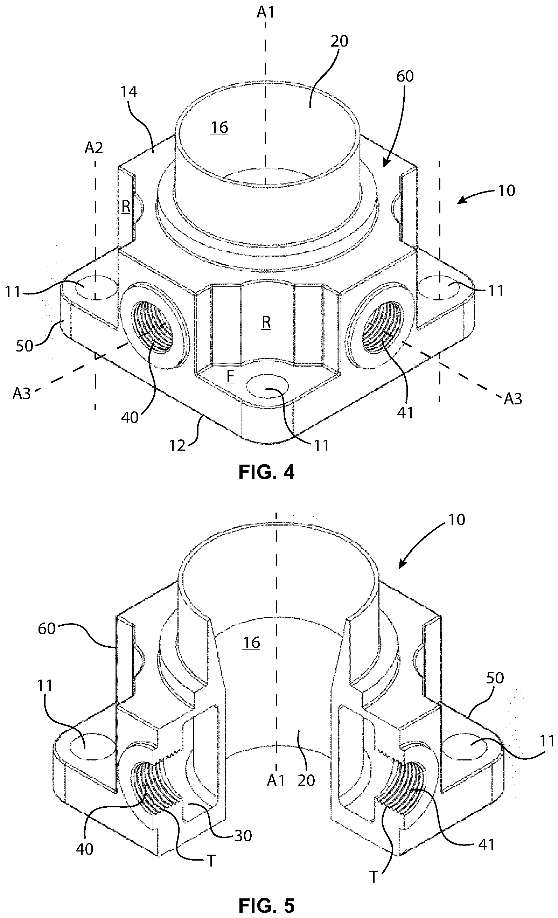

Fig. 4 is a perspective view of an embodiment of one of the two connector flanges 10, 10'. The connector flange 10, 10' is normally made as a single-piece, integrally formed stainless steel body, and has an internal annular conduit 30 for the heating or cooling fluid, see fig. 5. The connector flange 10, 10' may be cast in a mould with a body of wax or a similar material that is shaped as the annular conduit 30 and that is burned out to form the annular conduit 30. 3-D printing technology may alternatively be used for manufacturing the connector flanges 10, 10'.

More specifically, the connector flange 10, 10' has a front side 14, an opposite rear side 12 and a central fluid flow passage 20 that opens up to the outside of the connector flange 10 at the front side 14 and at the rear side 12, the central flow passage 20 defining a central axis A1 of the connector flange 10. The rear side 12 is configured to be oriented towards a side 3 of the valve housing 2 when the connector flange 10, 10' is connected to the valve housing 2 as shown in figs. 1-3, to allow for a fluid to flow between the central flow passage 20 and the inside of the valve housing 2, as well as for the aforementioned heat exchange.

A flared connection portion 16 at the front side 14 is configured for connection with the end 9 of a pipeline section 8, to allow for fluid to flow between the pipeline section 8 and the central flow passage 20. As is conventional for connector flanges in general, at least four through-going apertures 11, 11' are provided, opening up at the rear side 12 and each configured for receiving a respective bolt 6 for connecting the connector flange 10 to the valve housing 2 and/or to the opposite connector flange 10', as shown in figs. 1-3.

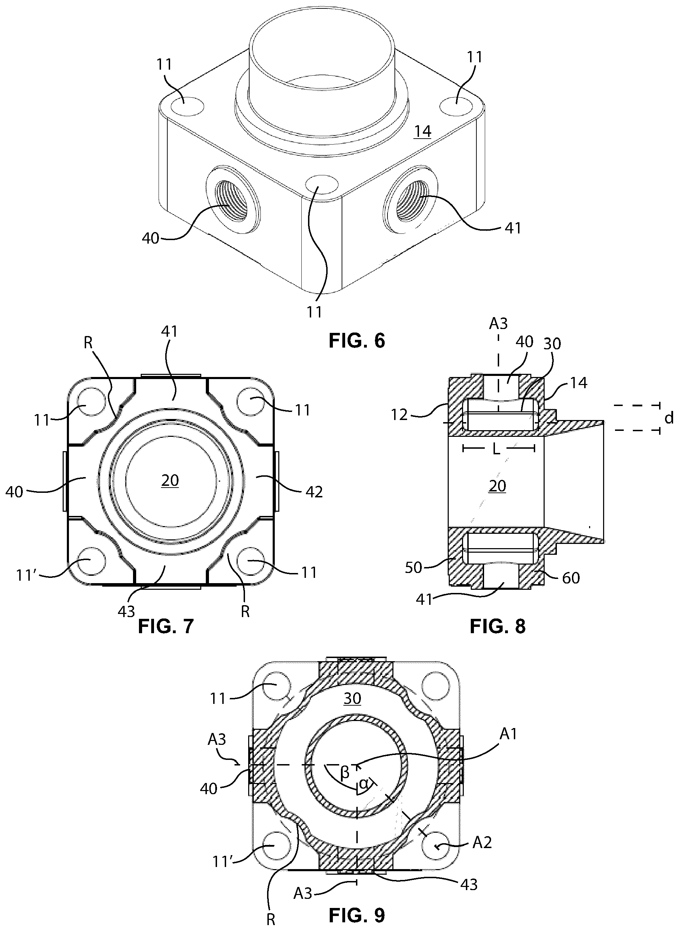

The internal annular conduit 30 extends around the central flow passage 20, as seen best in fig. 9, and defines an internal fluid flow passage separate from, i.e. not in communication with, the central flow passage 20. The annular conduit 30 may as shown in fig. 8 have a non-circular, flat cross-section, i.e. a width L measured along the central axis A1 of the connector flange 10, 10' that is smaller than the height d of the annular conduit 30 perpendicularly to the central axis A1 of the connector flange 10, 10', to thereby reduce the outside dimensions of the connector flange 10, 10'.

The connector flange 10, 10' also has at least three ducts 40, 41, 42, 43 that each communicates with the annular conduit 30 and extends in a respective radial direction relative to the central axis A1 of the connector flange 10, 10', to the outside of the connector flange 10. At least two of the ducts 40, 41, 42, 43 are configured for connection to the aforementioned pipe 910 and conduit 5, for outside supply or discharge of a fluid to/from the annular conduit 30.

As seen best in fig. 9, each of the through-going apertures 11, 11 for the bolts 6 is located between neighbouring ones of the ducts 40, 41, 42, 43; moreover, each duct 40, 41, 42, 43, of which there are preferably four, is preferably offset about the central axis A1 of the connector flange 10, 10' by an angle β of 90°, or about 90°, relative to a neighbouring one of the ducts 40, 41, 42, 43.

By the invention, the conduit 5 for the heating or cooling fluid may be connected directly to a selected duct 40, 41, 42, 43 of each of the two opposite connector flanges 10, 10', the selection being such that, considering the pipeline architecture, removal of the valve housing 2 in a sideways direction likely not to be blocked, or not being blocked, by any adjacent pipeline is possible.

In the embodiment of fig. 4 the connector flange 10, 10' incudes a first portion 50 that has a first thickness measured along the axis A1 and that defines a) the rear side 12, b) a first length of the central flow passage 20 and c) the through-going apertures 11, and a second portion 60 of a second, larger thickness. The second portion 60 defines a) the front side 14, b) at last a part of the annular conduit 30 and the ducts 40, 41, 42, 43, c) a second length of the central passage 20, and d) an elongated recess R adjacent to each through-going aperture 11, 11'. The elongated recesses R extend from the first portion 50 to the front side 14, between two neighbouring ducts 40, 41, 42, 43, and allow for a nut 7 to be applied and tightened against a face F of the first portion 50 opposite the front side 14. This embodiment may be considered optimal from a materials saving perspective, but an alternative embodiment having no recesses R is shown in fig. 6. The aforementioned height of the internal conduit 30, measured perpendicularly to the central axis A1 of the connector flange 10, 10', may be locally reduced in the area of the recesses R, as shown in fig. 9.

Of the ducts 40, 41, 42, 43, at least one duct may be plugged, and/or be configured for receiving components such as a removable temperature sensor 35 for registering the temperature of the cooling/heating fluid flowing in the annular conduit 30, a removable plug for closing off the duct to the outside, and/or a removable venting valve 36 for venting the annular conduit 30. As shown, at least two of the ducts 40, 41 have a threaded portion T, preferably for connection with the aforementioned components and connectors 37 for the supply pipe 910 and the conduit 5. A plugged duct may be configured to be opened by drilling, if desired to later gain access to the annular conduit 30 via that duct, although preferably the connector flange 10, 10' will always be manufactured with at least three open ducts 40, 41, 42, 43.

In the preferred embodiment of fig. 9 the ducts 40, 41, 42, 43 of which there are four define a respective central duct axis A3 that extends radially and preferably also perpendicularly relative to the central axis A1, with each respective central duct axis A3 being offset about the central axis A1 by an angle α of 45°, or about 45°, relative to a central aperture axis A2 of a neighbouring one of the through-going apertures 11.

It is noted that one of the connectors 37, which preferably is screwed into one of the internal ducts 40, 41, 42, 32 and which is connected with either the supply pipe 910 and the conduit 5, may include a manually or remotely adjustable valve body for adjusting the through flow of the heating or cooling fluid. Alternatively, such a valve body may be included in one of the aforementioned components.

As shown in figs. 1 and 2 the aforementioned upstream valve with handle H', which valve preferably serves exclusively as an open/close valve for cutting off flow through the two pipeline sections 8, has a valve housing 2' which on the one side is connected to a third connector flange 10" of the present invention. This valve housing 2' may on the other side be connected to a conventional connector flange 100 providing no heat exchange functionality by any cooling or heating fluid. A further conduit 5' may as shown connect the third connector flange 10" to one of the three internal ducts of a connector flange 10' of the connection system 1 of fig. 2, by a connector 37'. The direction of flow of the heating or cooling fluid relative to the direction of flow of the fluid in the pipeline may be selected to best fit the operational parameters. In other words, heating or cooling fluid may first flow, preferably by pumping, through the further conduit 5', from the third connector flange 10" and into the connection system 1, or in the opposite direction entering via the shown heating or cooling fluid supply pipe 910.

Although not presently foreseen the at least three ducts 40, 41, 42, 43 may be formed so as to extend tangentially to the annular conduit 30, oriented perpendicularly or essentially perpendicularly to the central axis A1 of the central flow passage 20, to the outside of the connector flange 10, 10'.

## Claims

1. A coupling body (10) for connecting an end (9) of a pipeline section (8) to a side (3) of a valve housing (2), the coupling body (10) having:
- a front side (14) and an opposite rear side (12),
- a central flow passage (20) opening up to the outside of the coupling body (10) at said front side (14) and at said rear side (12), said central flow passage (20) defining a central axis (A1) of the coupling body (10),
- - said rear side (12) configured to be oriented towards a side (3) of a valve housing (2) when the coupling body (10) is connected to the valve housing (2), to allow for a fluid to flow between said central flow passage (20) and the inside of said valve housing (2),
- a connection portion (16) at said front side (14) configured for connection with an end (9) of a pipeline section (8), to allow for said fluid to flow between said pipeline section (8) and said central flow passage (20), and
- at least four through-going apertures (11, 11') opening up at said rear side (12), each configured for receiving a respective bolt (6) for connecting the coupling body (10) to the valve housing (2),
- an internal annular conduit (30) extending around said central flow passage (20) and defining an internal flow passage separate from said central flow passage (20),
**characterised in** said coupling body (10) further including:
- at least three ducts (40, 41, 42, 43), each communicating with said annular conduit (30) and extending in a respective radial direction (A3) relative to said central axis (A1) to the outside of the coupling body (10), at least two of said ducts (40, 41, 42, 43) being configured for connection to an end of a respective pipe (90, 91) for outside supply or discharge of a fluid to/from said annular conduit (30).

2. The coupling body of claim 1, each of said through-going apertures (11, 11') being located between neighbouring ones of said ducts (40, 41, 42, 43).

3. The coupling body (10) of claim 1 or 2, each duct (40, 41, 42, 43) being offset about said central axis (A1) of the coupling body (10) by an angle (β) of 90°, or about 90°, relative to a neighbouring one of said ducts (40, 41, 42, 43).

4. The coupling body (10) according to any of the previous claims, including four of said ducts (40, 41, 42, 43).

5. The coupling body (10) according to any of the previous claims, including:
- a first portion (50) of a first thickness defining said rear side (12), a first length of said central flow passage (20) and said through-going apertures (11), and
- a second portion (60) of a second thickness, said second portion (60) defining:
- - said front side (14),
- - at last a part of said annular conduit (30) and said ducts (40, 41, 42, 43),
- - a second length of said central passage (20), and
- - an elongated recess (R) adjacent to each through-going aperture (11, 11'), each elongated recess (R) extending from said first portion (50) to said front side (14), between two neighbouring ducts (40, 41, 42, 43).

6. The coupling body (10) according to any of the previous claims, at least one of said ducts (41) being plugged, or being configured for receiving a temperature sensor (35), a removable plug for closing off the duct (41) to the outside, or a venting valve (36) for venting said annular conduit (30).

7. The coupling body (10) according to any of the previous claims, at least two of said ducts (40, 41, 42, 43) having a threaded portion (T) on an inner surface thereof.

8. The coupling body (10) according to any of the previous claims, at least three of said ducts (40, 41) being configured for receiving a connector (37) of a pipe (90, 91, 910), for supply or discharge of fluid to/from said annular conduit (30) via two of said ducts (40, 41), said connector (37) optionally including a valve for shutting off flow of said fluid through said ducts (40, 41).

9. The coupling body (10) according to any of the previous claims, said ducts (40, 41, 42, 43) defining a respective central duct axis (A3) extending radially and preferably also perpendicularly relative to said central axis (A1) of said coupling body (10), each respective central duct axis (A3) being offset about said central axis (A1) by an angle (α) of 45°, or about 45°, relative to a central aperture axis (A2) of a neighbouring one of said through-going apertures (11).

10. The coupling body (10) according to any of the previous claims, including four of said ducts (40, 41, 42, 43) and four of said through-going apertures (11, 11').

11. A pipeline connection system (1) comprising a valve housing (2) and a pair of pipeline section (8) coupling bodies (10, 10'), **characterised in**
- a valve housing (2) arranged between a first coupling body (10) and a second coupling body (10'), each coupling body (10, 10') being as defined in any of the previous claims and each having its rear side (12) placed against a respective one of two opposite sides (3) of the valve housing (2), with the central axis (A1) of one coupling body (10) aligned with the central axis (A1) of the other coupling body (10'), the valve housing (2) and the two coupling bodies (10) being connected by bolts (6) extending through respective, opposite ones of said through-going apertures (11, 11') and preferably through at least one corresponding through-going aperture (4) or lug of said valve housing (2), and
- a valve housing (2) heating or cooling fluid conduit (5) having a first end (E1) connected to a duct (40) of the first one (10) of said coupling bodies (10) and a second end (E2) connected to a duct (40') of the second one (10') of said two coupling bodies (10, 10'), for direct flow from the first coupling body (10) to the second body (10') of a cooling or heating fluid to heat or cool said valve housing (2) by thermal conduction where said rear sides (12) contact said opposite sides (3) of said valve housing (2), said conduit (5) extending along one side of said valve housing (2) to allow for sideways removal of said valve housing (2) perpendicularly to said aligned central axes (A1) of said two coupling bodies (10, 10') and away from said conduit (5), after removal of at least one of said bolts (6),
- said system (1) preferably including a valve for shutting off flow of said heating or cooling fluid through said conduit (5) prior to said removal of said valve housing (2).

12. The connection system (1) according to the previous claim, said conduit (5) connected to the two ducts (40, 40') being U-shaped.
